# EUROPEAN PATENT APPLICATION

(11) **EP 2 692 242 A1**
(43) Date of publication of application: **05.02.2014**
(21) Application number: 12178463.1
(22) Date of filing: 30.07.2012
(51) Int. Cl.: A23L 1/00, A23L 1/03, A23L 1/0522, A23L 1/315

(54) **Microwaveable batter**

(71) Applicant: Crisp Sensation Holding SA, 1208 Geneva (CH)
(72) Inventor: Pickford, Keith, Manchester Lancashire M45 7QF (GB)
(74) Representative: Browne, Robin Forsythe

(57) **Abstract**

A microwave cookable or reheatable foodstuff coating composition comprises 55 to 80 wt% water and 20 to 45 wt% by dry weight of an ingredient mixture including:
a. 35 to 60 wt% of a flour component comprising one or more flours selected from soy flour, maize flour, rice flour and wheat flour;
b. 15 to 35 wt% of non-modified starch;
c. 0.1 to 5 wt% of a gelling agent;
d. 0 to 15 wt% of modified starch; and
e. 0 to 35 wt% of other edible ingredients.

## Description

This invention relates to a coating for foodstuffs, which is cookable or reheatable using a microwave oven, combination microwave oven or by radiant heat by any means. The invention relates particularly but not exclusively to microwaveable cookable or reheatable batters or breaded coatings.

Microwave ovens are commonly used for heating food products, which have been pre-prepared by a foodstuff manufacturer. Pre-prepared products include batter coated foodstuffs in which the basic foodstuff, for example meat, fish, poultry, vegetables, fruit or dairy products, has been coated in a batter optionally coated with crumbs, deep fried and then frozen for supply to a consumer.

Heating in a microwaveable oven may complete the cooking process or simply reheat a previously cooked product. Microwave cookable coatings have particular requirements. Microwave energy penetrates throughout a food product. Steam released from the core of a food product can cause the batter coating to become soggy. This impairs the texture and taste of the product.

WO85/0118 disclosed batters containing high amylose flour for microwaveable prefried foodstuffs. WO 88/06007 disclosed a batter composition and method of preparation wherein the foodstuff is pre-dusted with high amylose starch and methylcellulose. The batter included high enzyme soya flour. WO93/003634 disclosed an improved pre-dust composition including a mixture of particulate starch and particulate cellulose gum, which gelled on heating in the presence of moisture. Such a pre-dust can form a dense, high viscosity barrier to absorption of oil and migration of moisture. The barrier also provides a stable environment for any seasoning and can enhance bonding with the batter. Although high enzyme soy flours generally afford acceptable products, variations in their enzyme content have given rise to inconsistent and occasionally undesirable flavours. WO96/032026 disclosed a microwaveable batter comprising starch, flour, a gelling agent, an enzyme, additive and further ingredients. An exemplified formulation comprised genetically modified high amylose maize flour.

It is the object of the present invention to provide a batter coating having improved ease of manufacture and beneficial properties during manufacture, storage and upon consumption.

Batter or breaded coatings in accordance with this invention are preferably cookable or reheatable using conventional ovens or fryers in addition to microwave ovens and combination microwave ovens.

Although the previously disclosed formulations may provide acceptable batters, careful control of the manufacturing conditions may be necessary in order to control the extent of enzymolysis and consequently the viscosity and chemical composition of the resultant batter. Temperature variations or the time before a batter is allowed to stand before use may have an adverse effect on viscosity. Control of viscosity is important to ensure correct and reproduceable application and retention upon substrates and also correct pick-up of crumb for an outer coating. For example, one batch of batter may be used immediately after mixing whereas another batch may be stored overnight before use. Ambient temperatures may be different and may vary during a manufacturing process.

Reproduceability may be difficult under commercial manufacturing conditions, for example if a dry pre-mixed formulation is supplied for use at various geographic locations using different equipment or by personnel with different levels of expertise.

According to a first aspect of the present invention, a microwave cookable or reheatable foodstuff coating composition premix comprises:
a) soluble products from enzymolysis of a mixture comprising:
   (i) a starch component selected from 15-35% non-modified starch; 0-15% modified starch and mixtures thereof;
   (ii) a flour component comprising one or more flours;
   (iii) an enzyme component comprising alpha-amylase,
b) water; and
c) a solid phase comprising:
   insoluble products from the enzymolysis; and
   solid phase components including:
      (i) whole egg;
      (ii) thickener; and
         one or more of:
      (iii) emulsifier;
      (iv) emulsifier;
      (v) gelling agent;
      (vi) reducing sugar; and
      (vii) other edible components.

According to a second aspect of the present invention, a microwave cookable or reheatable foodstuff coating composition comprises a homogeneous mixture comprising:
a pre-mix in accordance with a first aspect of this invention, wherein when the soluble products, solid phase and water are mixed,
and wherein the coating composition has a viscosity in the range of 550 to 600 cp.

According to a third aspect of the present invention, a method of manufacture of a a microwave cookable or reheatable foodstuff coating composition premix comprises the steps of:
a) mixing:-
   (i) a starch component selected from non modified starch, modified starch and mixtures thereof;
   (ii) a flour component comprising one or more flours;
   (iii) an enzyme component comprising alpha-amylase; and
   (iv) water to form an aqueous component; and
b) allowing enzymolosis of the aqueous component to form a solid residue and a supernatant liquid;
c) separating the solid residue and supernatant;
d) adding the solid residue to further solid phase ingredients to form a solid phase comprising:
   insoluble products from the enzymolysis; and
   solid phase compounds
   wherein the solid phase compounds are selected from:-
      (i) whole egg;
      (ii) thickener; and one or more of
      (iii) emulsifier;
      (iv) a gelling agent;
      (v) reducing sugar; and
      (vi) other edible components;
e) optionally storing the supernatant and solid phase; and
f) mixing the supernatant and solid phase to form a coating composition.

The coating composition premix, method of manufacture, the resultant coating composition and coated food products of this invention have several advantages in comparison to previous microwaveable batter compositions.

The coating composition may be referred to as a batter.

The enzymolysis of the alpha amylase-containing ingredients may be carried out under controlled conditions using apparatus configured to provide optimum results. The processing temperature and extent of mixing may be precisely controlled. The extent of enzymolysis may be monitored so that the reaction may be stopped at a desired end point to accommodate batch to batch variations in the ingredients employed.

Sensitive ingredients which may be adversely affected by exposure to the enzymolysis reaction, such as flavourings or gelling agent, may be added to the solid phase. Previously such sensitive ingredients could only be added to each batch after the batter had been mixed and the enzymolysis concluded, making the addition susceptible to local operator errors and batch to batch variations.

Particular additions such as pieces of parsley or other herbs, nuts or seeds may be added to the solid phase.

According to a preferred embodiment of the present invention, a microwave cookable or reheatable foodstuff coating premix comprises:
(a) an aqueous composition comprising soluble products from enzymolysis of a mixture comprising 55-80 wt% water and 20-45% by dry weight of the total premix of:
   (i) 15-35wt% modified starch;
   (ii) 0-15 wt% of modified starch;
   (iii) 35-60 wt% of a flour component comprising one or more flours; and
   (iv) an enzyme component comprising alpha-amylase; and
(b) a solid phase comprising:
   insoluble products from the enzymolysis; and
   solid phase components comprising:-
      (i) 10-18 wt% whole egg;
      (ii) 0.1 to 5 wt% of a gelling agent;
      (iii) one or more further ingredients selected from: emulsifier, reducing sugar and other soluble components;
   wherein the percentages of the solid components are by dry weight of the total solid components of the composition.

The supernatant may be partially or completely dried for storage or transportation before use. Water may be wholly or partially removed by evaporation, freeze drying or reverse osmosis. Preferably the drying conditions are selected to minimise thermal or chemical degradation of the soluble components.

The dried supernatant may be granulated to facilitate rapid rehydration and dissolution when required for use.

An enzyme inhibitor, for example sodium metabisulphite, may be added to the aqueous component before or after separation to prevent further enzymolysis during storage or transportation.

The gelling agent may be selected from the group consisting of collagen, alginate, xanthan gum, gelatine, guar gum, agar gum, gum arabic, locust bean gum, carrageenan gum and combinations thereof.

The amount of the starch component in the whole batter, excluding any starch which may be present in the flour, may comprise about 20-35%, more preferably about 28.8%, by weight of the dry ingredients.

The starch preferably comprises wholly or partially high amylose starches. In this specification high amylose starch refers to starch having an amylose content of at least 50%. Preferably maize starch is used, for example as manufactured under trademark HYLON 7 of National Starch. An amylose content of about 60% to about 80%, preferably about 72-77%, is preferred.

The flour component may comprise about 30% to about 55% of the entire composition, by weight of the dry ingredients. The percentage of the dry ingredients is important to provide a composition having optimal viscosity or a range of viscosities which may be achieved by adjustment of the dilution of the mixture prior to use dependent on the nature of the substrate to be coated, the water content of the substrate, the adhesive characteristics of the substrate surface and the desired properties of the resultant coating.

The weight ratio of flour to starch components, that is non-flour starch, may be in the range of about 36% to about 87%, preferably about 50% to about 63%.

Preferred flour components comprise a mixture of one or more selected from the group consisting of soy flour, maize flour, rice flour, barley flour, rye flour and wheat flour. Spelt flour, a gluten-containing wheat flour may be used.

Mixtures of more than two flours may not be preferred for simplicity of manufacture and product consistency.

The flour component may include one first gluten free flour, preferably soy flour for example HiSoy supplied by Bake Mark UK manufactured from soya beans of Canadian origin and maize flour for example French maize flour YF36 manufactured by Smiths Flour Mills. Maize flour is gluten free. Gluten free flour referred to in this specification may contain less than 1% gluten, preferably less than 0.1% gluten. In particularly preferred flours, gluten is completely absent.

The flour component may contain from about 25% to about 70% of maize flour.

The flour component may contain from about 30% to about 75% of one or more other gluten free flours.

Use of gluten-free flour or low gluten flour is advantageous to avoid formation of a slimy layer or deterioration when frozen, particularly if partially thawed and re-frozen before use, such as may occur during transportation from a store to a customer's home.

The flour mixture preferably has a fat content of about 15-33%, more preferably about 20-28%, especially about 24%. Full fat soy flour may be employed.

The enzyme additive is preferably a concentrated enzyme preparation. Enzyme containing conventional ingredients used in batter, for example high enzyme flours, are inconsistent and are not preferred. However, the concentrated enzyme preparation may be blended with a further ingredient such as starch or flour to facilitate mixing into the composition. The enzyme preparation may contain buffers or stabilizers.

Preferred enzyme additives include bacterial amylases, for example, Novamyl BG10000.

The additive preferably contains only the enzymes required for the coating composition. Lipoxygenases or other enzymes, which may be present in commercial high enzyme flours are preferably avoided since these may give rise to adverse flavours.

The ingredients may include whole egg in an amount of about 10-18%, preferably about 14%, may be employed. The egg may comprise dried egg. This may comprise dried whole egg or a blend of egg white and egg yolk.

Glyceryl monostearate may be used as an emulsifier. Alternative emulsifiers such as lecithin may be used. An amount of 1% to 5%, preferably about 2%, may be employed.

The gelling agent or thickener (referred to for convenience as a gelling agent) is employed in an amount sufficient to stabilise the coating as an emulsion. One or more of the following may be employed: collagen, alginate, xanthan gum, gelatine, guar gum, agar gum, gum arabic, locust bean gum, or carrageenan gum. Use of guar gum or mixtures containing guar gum is preferred. Alternatively mixtures of guar and xanthan gums may be used. An amount of the gelling agent which is effective to provide a thickened composition may be used. An amount of about 0.1% to about 5%, preferably about 0.5% to about 3%, more preferably about 1 %, may be employed. The gelling agent is preferably present in an amount sufficient to give long-term stability, for example to allow the batter to be stored before use.

A reducing sugar or mixture of reducing sugars may be used to give colour to the cooked coating. D-xylose is preferred although fructose, maltose or mixtures of these reducing sugars may be used. An amount of about 1-3%, preferably about 2%, is preferred. Colourants such as powdered caramel may be added.

A phosphate may be employed in the aqueous component in an amount of about 0.7 to 3% to adjust the pH for optimum enzyme activity. Monosodium phosphate in an amount of about 1.87% is preferred.

The further ingredients preferably include ammonium bicarbonate used as an aid to formulation. An amount of about 0.7% is preferred.

Glucono-D-lactone may be used as a slow release pH adjuster. An amount of about 0.67% may be employed.

Sodium acid pyrophosphate may be used to regulate pH. An amount of about 0.37% may be employed.

A thickener, for example methylcellulose, such as Methocel A4M, may be used in the solid phase component, for example, in an amount of about 0.1-1%, preferably about 0.25%.

Use of a coating composition in accordance with this invention confers several advantages. The coating adheres well to a substrate and to subsequently applied crumb. The coating allows escape of moisture during frying but does not give a high degree of fat pickup from the frying oil. A shell-like coating is formed to give a desirably crisp bite.

The gel, batter and crumb form an integral consolidated layer after cooking.

The viscosity of the coating composition comprising the combined aqueous component and solid phase before use is preferably in the range of about 400 to 700 cP, preferably about 550 cP, measured using a Brookfield viscometer with a No 3 spindle at 60 rpm.

A pre-dust or pre-coating may be applied to the substrate before application of the batter composition. A conventional pre-dust may be used but use of an aqueous gel is preferred.

The aqueous gel may comprise, by dry weight:
starch range 28 to 40%;
thickener range 18 to 30%;
xanthan gum range 20 to 35%;
egg albumen range 10 to 25%.

A preferred formulation is:
starch 35%;
thickener 25%;
xanthan gum 25%;
egg albumen 15%;
by dry weight.

Amounts and quantities referred to in this specification are by dry weight unless indicated otherwise. Percentages and other proportions are selected from ranges given to total 100%.

The invention is further described by means of example but not in any limitative sense.

### EXAMPLES

### Example 1

An aqueous phase was prepared from the following ingredients:-

| | Wt% |
|---|---|
| High amylose starch (Hylon 7) | 28.8 |
| Soy flour (Hisoy) | 48.2 |
| Sodium acid pyrophosphate | 0.4 |
| Alpha-amylase | 0.1 |
| Water | |

The aqueous phase incubated at a temperature of 34°c for 24 hours with stirring using a paddle stirrer. The enzyme activity was halted by addition of 1% sodium metabisulphite and the solid phase components were separated by centrifugation. The solid phase components were then dried

A solid phase composition was prepared by adding the dried products from the enzymolysis to the following mixture.

| | |
|---|---|
| Dried whole egg (Henningsen W1) | 14.0 |
| Guar gum | 1.0 |
| Methylcellulose (Methocel A4M) | 0.2 |
| Glyceryl monostearate | 2.0 |
| D-xylose | 2.0 |
| Monosodium phosphate | 1.9 |
| Ammonium bicarbonate | 0.7 |
| Glucono-deltalactone | 0.7 |

The premix comprising the aqueous phase and solid phase were packaged separately for storage until required for use.

The batter composition was manufactured by combining the aqueous phase and solid phase components.

### Example 2 - Preparation of frozen chicken nuggets.

A dry stabilizer composition was prepared using the following ingredients:

| | Wt% |
|---|---|
| Methylcellulose (Methocel A4M) | 15 |
| Starch (Thermflo) | 24 |
| Egg albumen | 15 |
| Xanthan gum | 6 |
| Polydextrose | 40 |

A chicken mixture for chicken nuggets was prepared with the following composition:

| | Wt% |
|---|---|
| Chicken emulsion | 20 |
| Skin - 3mm | 18 |
| Chicken breast - 10mm | 50 |
| Water | 2 |
| Rusk | 2 |
| Stabiliser (Example 7) | 5 |
| Seasoning | 3 |

The chicken breast was chilled to -3°C and minced using a 10mm plate. After mincing, the temperature was 0-3°C. Water was added with mixing. A chicken emulsion comprising the following ingredients was added with mixing:

| | Wt% |
|---|---|
| Chicken skin | 44 |
| Water | 44 |
| Soy isolate | 11 |
| Salt | 1 |

The dry stabiliser composition was added and mixed thoroughly. Rusk was added with mixing followed by seasoning. A vacuum was applied to the mixture to consolidate the structure following which the chicken mixture was chilled to -3°C and formed into shaped pieces.

In the meantime, an aqueous pre-coating composition had been prepared from a dry mix having the following composition:

| | Wt% |
|---|---|
| Modified starch (Thermflo) | 35 |
| Thickener (Methocel A4M) | 25 |
| Xanthan gum | 25 |
| Egg albumen | 15 |

The mixture was dissolved in water to form a 1% solution using a CFS Scanbrine mixer with paddle agitation. The solution was left to stand for 24 hours before being applied to the impregnated substrate pieces using a tempura type batter applicator in which the substrate pieces was dipped. To prevent the formation of bubbles in the aqueous pre-coating composition anti foaming agents can be used.

A fine crumb having a mesh size of less than 1 mm was prepared as disclosed in WO 2010/001101. This fine crumb was applied to the pre-coated substrate pieces using a CFS Crumbmaster breadcrumb applicator.

The crumbed pieces so produced were coated with the batter described in Examples 1-6. To this end the crumbed pieces were passed through the batter in a tempura batter applicator.

Next, a coarse crumb (particle size 3-4 mm) was applied to the battered substrate pieces in a second CFS Crumbmaster applicator with slight pressure from a roller.

The coated substrate pieces so obtained were fried in pure, fresh rapeseed oil for 2 minutes 20 seconds approximately at 180-188°C. After frying, the core temperature was approximate 90°C.

The products were quickly transferred from the fryer into a cryogenic freezer by a conveyor belt. On entry into the freezer the core temperature of the substrate pieces was still above 75°C. The frozen products were packaged and stored for at least 10 weeks.

## Claims

1. A microwave cookable or reheatable foodstuff coating composition premix comprising:
(a) soluble products from enzymolysis of a mixture comprising:
(i) a starch component selected from 15-35% non-modified starch; 0-15% modified starch and mixtures thereof;
(ii) a flour component comprising one or more flours;
(iii) an enzyme component comprising alpha-amylase;;
(b) water; and
(c) a solid phase comprising:
insoluble products from the enzymolysis; and
solid phase components including:
(i) whole egg;
(ii) thickener; and
one or more of:
(iii) emulsifier;
(iv) emulsifier;
(iv) gelling agent;
(v) reducing sugar; and
(vi) other edible components.

2. A composition as claimed in claim 1, wherein the flour component is selected from soy flour, maize flour, wheat flour, rice flour and combinations thereof.

3. A coating composition as claimed in claim2, wherein the flour component is rice flour.

4. A coating composition as claimed in claim 2, wherein the flour component comprises a mixture of two or more gluten free flours including maize flour.

5. A coating composition as claimed in any preceding claim, wherein the solid phase contains 0.1 to 5 wt% of a gelling agent selected from the group consisting of: collagen, alginate, xanthan gum, gelatine, guar gum, agar gum, gum arabic, locust bean gum, carrageenan gum and combinations thereof.

6. A coating composition as claimed in any preceding claim, wherein the solid phase comprises 5-25 wt% of egg material selected from whole egg, egg yolk, egg white and combinations thereof.

7. A coating composition as claimed in any preceding claim, wherein the starch component comprises 20 to 32 wt% non-modified starch.

8. A coating composition as claimed in any preceding claim, wherein the ingredient solid phase comprises 0.5 to 3 wt% of the gelling agent.

9. A coating composition as claimed in any preceding claim wherein the gelling agent is guar gum.

10. A microwave cookable or reheatable foodstuff coating composition comprising a homogeneous mixture comprising:
a pre-mix as claimed in any of claims 1 to 10, wherein when the aqueous phase and solid phase are mixed,
and wherein the coating composition has a viscosity in the range of 550 to 600 cp.

11. A method of manufacture of a microwave cookable or reheatable foodstuff coating premix comprising the steps of:
a) mixing:
(i) a starch component selected from non modified starch, modified starch and mixtures thereof;
(ii) a flour component comprising one or more flours;
(iii) an enzyme component comprising alpha-amylase; and water to form an aqueous component;
b) allowing enzymolosis of the aqueous component to form a solid residue and a supernatant liquid;
c) separating the solid residue and supernatant;
(d) adding the solid residue to further solid ingredients to form a solid phase comprising:-insoluble products from the enzymolysis;
solid phase components selected from:-
(vii) whole egg;
(viii) thickener; and
one or more of:
(ix) emulsifier;
(x) a gelling agent;
(xi) reducing sugar; and
(xii) other edible components.
d) optionally storing the supernatant and solid phase; and
e) mixing the supernatant and solid phase to form a coating composition.

12. A method as claimed in claim 12, wherein the water content of the supernatant is reduced before optional storage.

13. A method as claimed in claim 13, wherein the supernatant is dried before optional storage.
